# EUROPÄISCHE PATENTSCHRIFT

(11) **EP 0 354 403 B1**
(45) Veröffentlichungstag und Bekanntmachung des Hinweises auf die Patenterteilung: **16.06.1993**
(21) Anmeldenummer: 89113572.5
(22) Anmeldetag: 24.07.1989
(51) Int. Cl.: B64C 1/10, B64D 11/00

(54) **Vorrichtung zum Abfangen von Lasten**
Load-supporting device
Dispositif pour arrêter une charge

(30) Priorität: 11.08.1988 DE 3827279
(43) Veröffentlichungstag der Anmeldung: 14.02.1990
(73) Patentinhaber: Deutsche Aerospace Airbus Gesellschaft mit beschränkter Haftung, 21129 Hamburg (DE)
(72) Erfinder: Finkbeiner, Robert, D-2833 Harpstedt (DE)

(56) Entgegenhaltungen:
- DE-U- 8 300 314
- FR-A- 2 212 249
- US-A- 3 132 603
- US-A- 3 217 664
- US-A- 3 791 310
- US-A- 4 185 799
- US-A- 4 758 299
- US-A- 4 765 569
- US-A- 4 780 034

## Beschreibung

Die Erfindung bezieht sich auf eine Vorrichtung zum Abfangen von Überlasten in einer Transportkabine eines Flugzeuges über eine zwischen einem Frachtraum und einem Passagierraum angeordnete zusätzliche, quer angeordnete, aus mehreren Schichten bestehende Schutzwand, die über Beschläge mit der Aufbaustruktur des Flugzeugrumpfes verbunden ist.

Aus der DE-A-26 49 991 sind Zwischenwände für Fahrzeuge bekannt, die begrenzt längs beweglich gehalten und mittels Arretiereinrichtungen festsetzbar sind. Die den Transportraum endseitig abschließenden Wände sind über Stoßdämpfer zur Fahrzeugendwand abgestützt. Des weiteren ist aus der DE-A-29 13 050 eine zwischen Frachtraum und Cockpit eines Flugzeuges anzuordnende Einrichtung zum Abfangen von Lasten bekannt, die ein Netz umfaßt, das in betriebsbereiter Stellung in einer Vertikalebene des Flugzeugrumpfes angeordnet und über dehnbare Gurte an der Rumpfstruktur des Flugzeuges mittels Anschlußbeschläge lösbar befestigt ist. Eine derartige Einrichtung benötigt einen relativ großen Freiraum hinter dem Netz, um die Lasten aufzufangen, wodurch der Passagierraum wesentlich verkleinert wird.

Aus der US-A-41 48 299 ist eine Zwischenwand für LKW-Anhänger bekannt, die aus einem Schaumkern und darauf aufgeklebten dünnen und dehnbaren Verstärkungsschichten besteht. Auf diese Verstärkungsschichten sind jeweils eine weitere Schaumschicht und darüber dünne Deckhäute geklebt, so daß die Zwischenwand aus insgesamt drei Schaumschichten, zwei Verstärkungsschichten und zwei Deckschichten besteht. Diese Zwischenwand ist aber nicht über Beschläge mit der Anhängerwand verbunden, sondern über Gurte, welche in Bügeln der Zwischenwand laufen und mit Rastklinken in Rastlöcher von Schienen der Anhängerwand eingreifen. Die Zwischenwand ist insgesamt elastisch ausgeführt und beuelt bei einem Stoß in Richtung des Stoßes aus. Des weiteren ist aus der US-A-41 85 799 eine Trennwand in Flugzeugen bekannt, die mittels Beschlägen in Bodenführungen gehalten ist, welche aber keine energieabsorbierenden Schichten umfaßt.

Aufgabe der Erfindung ist es, eine Einrichtung zum Abfangen von Lasten, wie Container oder dergleichen, mittels einer Schutzwand zu schaffen, die wenig Raum beansprucht und welche die Beschleunigungsenergie der Last auf relativ kurzem Weg absorbiert.

Diese Aufgabe wird erfindungsgemäß durch die kennzeichnenden Merkmale des Anspruches 1 gelöst. Weitere vorteilhafte Merkmale beinhalten die Unteransprüche.

Hierbei ist der angegebene Werkstoff CFK die Abkürzung für Carbonfaser-Kunststoff, d.h. ein mit Kohlenstoff-Faser verstärkter Kunststoff.

Die mit der Erfindung im wesentlichen erzielten Vorteile bestehen darin, daß durch die energieaufnehmende Schutzwand die Strukturanbindungen schwächer ausgelegt werden können und eine erhebliche Gewichtsreduzierung bewirkt wird. Die Schutzwand ist mit relativ geringem Raumbedarf den Erfordernissen entsprechend an der Zellenstruktur des Flugzeuges über Beschläge festlegbar. Ein Raum hinter der Schutzwand ist nicht mehr erforderlich, so daß die Anbringung unmittelbar an der Cockpitwand möglich ist bzw. diese Schutzwand des Frachtraum vom Passagierraum unmittelbar abtrennen kann.

Im Vergleich zu einem Netz hält die Schutzwand auch kleinere Gegenstände zurück.

Eine solche energieabsorbierende Schutzwand ist sowohl im Unterflurbereich als auch im Oberflurbereich von Transportflugzeugen zum Schutz von Passagierräumen, Ruheräumen und dergleichen geeignet. Selbstverständlich sind Schutzwände dieser Art auch zum Einbau in anderen Fahrzeugen geeignet.

Ausführungsbeispiele der Erfindung sind in der Zeichnung schematisch dargestellt und werden im folgenden näher beschrieben. Es zeigen:
- Fig. 1: eine mehrschichtige Schutzwand im Querschnitt, bestehend aus einer CFK-Grundwand und einem Integralschaumteil,
- Fig. 2: eine mehrschichtige Schutzwand in einem Horizontalschnitt, bestehend aus CFK-Grundwand und davor angeordneten Schichten aus Wabenzellenblöcken,
- Fig. 3: eine weitere Ausführung einer Schutzwand mit Deformationsstreben (Crashstreben),
- Fig. 4: eine Draufsicht auf die Deformationsstreben,
- Fig. 5: eine Ansicht auf die Ausführung gemäß Fig. 3 im zusammengedrückten Zustand der Streben,
- Fig. 6: eine Draufsicht auf die zusammengedrückte Strebe,
- Fig. 7: eine Ansicht in Flugrichtung, gesehen auf die Beschläge an der Schutzwand bzw. an der Zellenstruktur,
- Fig. 8: eine Seitenansicht einer an der Deckenstruktur und der Bodenstruktur über Beschläge festgelegten Schutzwand in drei möglichen Positionen,
- Fig. 9: einen als Rolle ausgebildeten Verstellbeschlag,
- Fig. 10: einen als Gleitkiel ausgebildeten Verstellbeschlag,
- Fig. 11: einen als Gleitschiene ausgebildeten Verstellbeschlag,
- Fig. 12: einen auf Rollen fahrbaren und über Gleitkiel geführten Verstellbeschlag für eine Schutzwand,
- Fig. 13: eine Seitenansicht der Schutzwand mit wandseitig gehaltenen Stützstreben,
- Fig. 14: eine Schutzwand mit integrierten Airbag-Einrichtungen und
- Fig. 15: einen Querschnitt durch die Schutzwand gemäß Fig. 14.

Bei der dargestellten Ausbildung ist ein Frachtraum 1 vom Passagierraum 2 durch eine Schutzwand abgetrennt, die zum Abfangen eines Containers oder dergleichen bei einem Aufprall des Flugzeuges auf ein Hindernis dient.

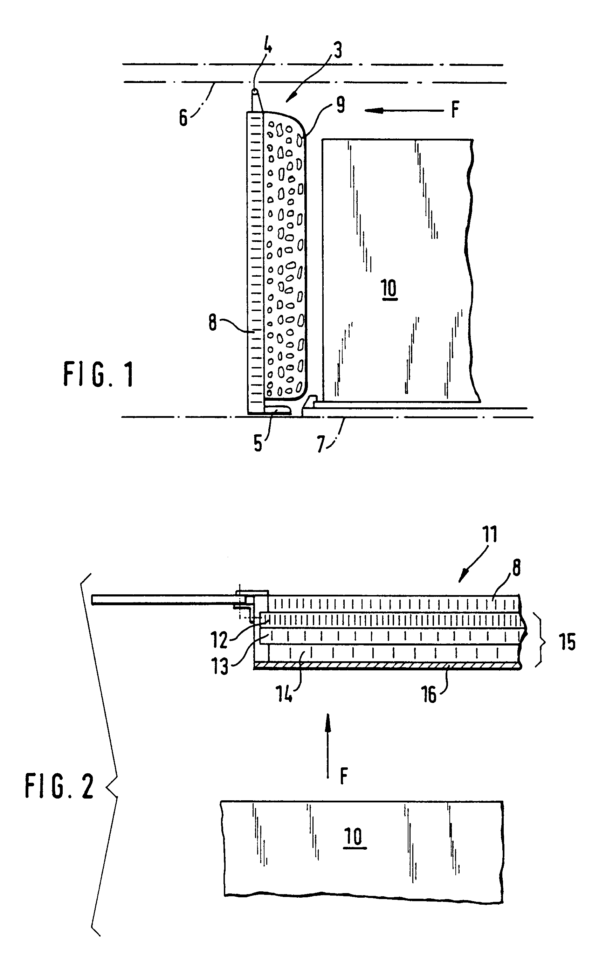

Gemäß Fig. 1 besteht die Schutzwand 3 aus einer mehrschichtigen Platte, die über Beschläge 4 und 5 an der Deckenstruktur 6 und an der Bodenstruktur 7 befestigt wird. Die Wand 3 umfaßt eine lasttragende CFK-Grundwand 8, die außenseitig mit einer Dekorschicht versehen ist und eine Vorderwand aus großzelligem Integralschaum 9 aufweist, der innig mit der CFK-Grundwand 8 verbunden ist. In Flugrichtig F gesehen, ist die Last, z.B. ein Container 10, vor der Wand 3 dargestellt.

Nach einer Ausführung gemäß Fig. 2 besteht die Schutzwand 11 aus der lasttragenden CFK-Grundwand 8 sowie einem aus hintereinander angeordneten Schichten 12,13 und 14 bestehendem Wandelement 15. Die Schichten 12 bis 14 sind aus mehrschichtigen, untereinander verklebten Aluminium-Wabenzellenblöcken gebildet, welche vorderseitig eine Metallschicht 16 geringer Zugfestigkeit, wie z.B. aus Aluminium, aufweisen.

Die Wabenzellenblöcke können zur definierten Energieaufnahme auch unterschiedliche Zellenweiten und Raumgewichte besitzen.

Nach einer weiteren Ausführungen, die nicht näher dargestellt, ist, besteht die Schutzwand aus harzgetränkten Papierwabenkernen mit CFK-Decklagen in Sandwich-Bauweise, wobei außenseitig ein Integralschaumblock vorgesehen ist, der der abzufangenden Last 10 zugerichtet ist. Dieser Integral-Schaumblock kann mit abgestuften Festigkeitszonen ausgeführt sein und weist eine geschlossene Oberfläche auf.

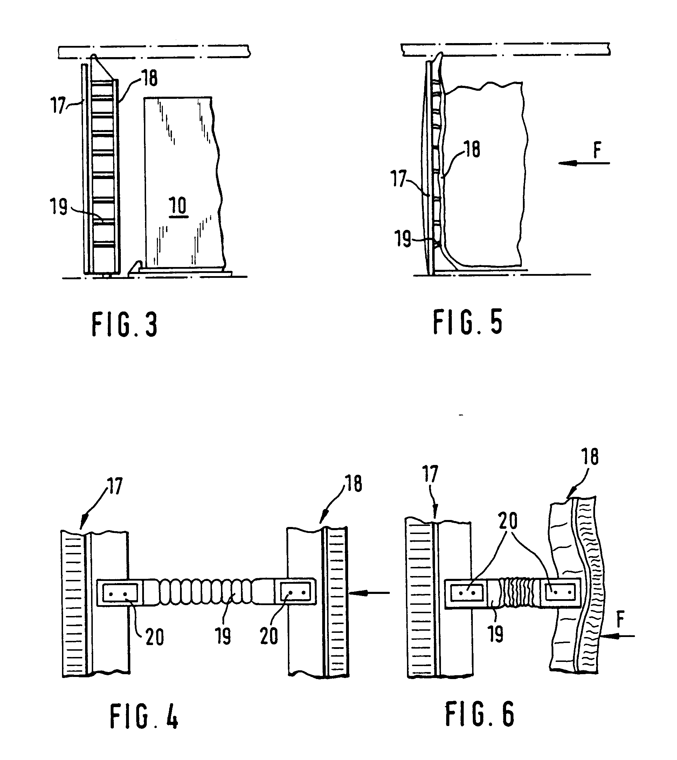

Zwischen einer Trennwand 17, die als Schutzwand ausgebildet sein kann, und einer Schutzwand 18, können Deformationsstreben 19 angeordnet sein, die über Anschlußbeschläge 20 mit der Wand 17 und 18 verbunden sind. Diese Streben 19 bestehen aus einem Wellrohr und deformieren sich bei einem Stoß des Containers 10 auf die Wand 18 in Pfeilrichtung F, wie Fig. 6 näher zeigt, und nehmen hierbei einen Teil der Bewegungsenergie des Containers auf. Die restliche Energie wird von der Schutzwand 18 absorbiert.

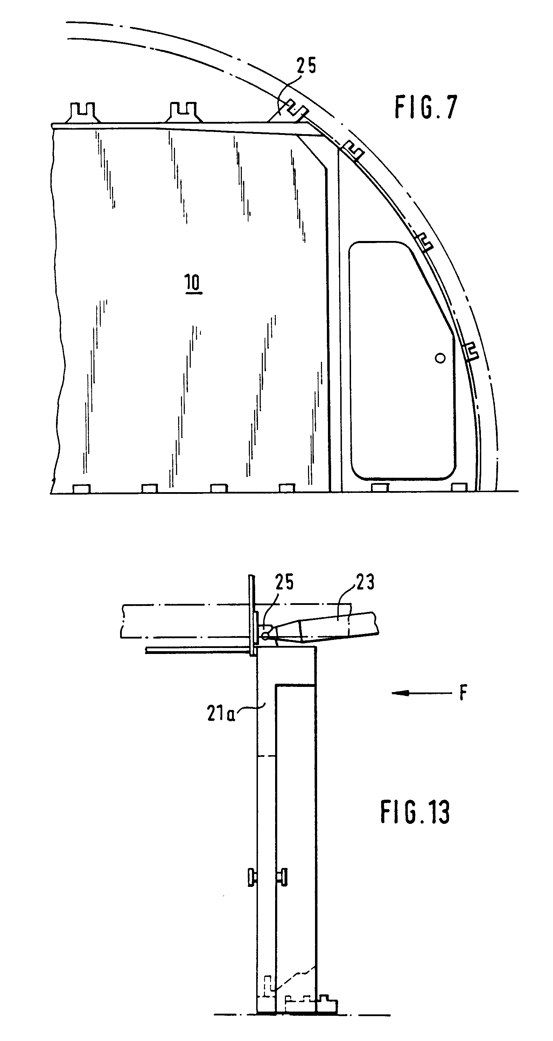

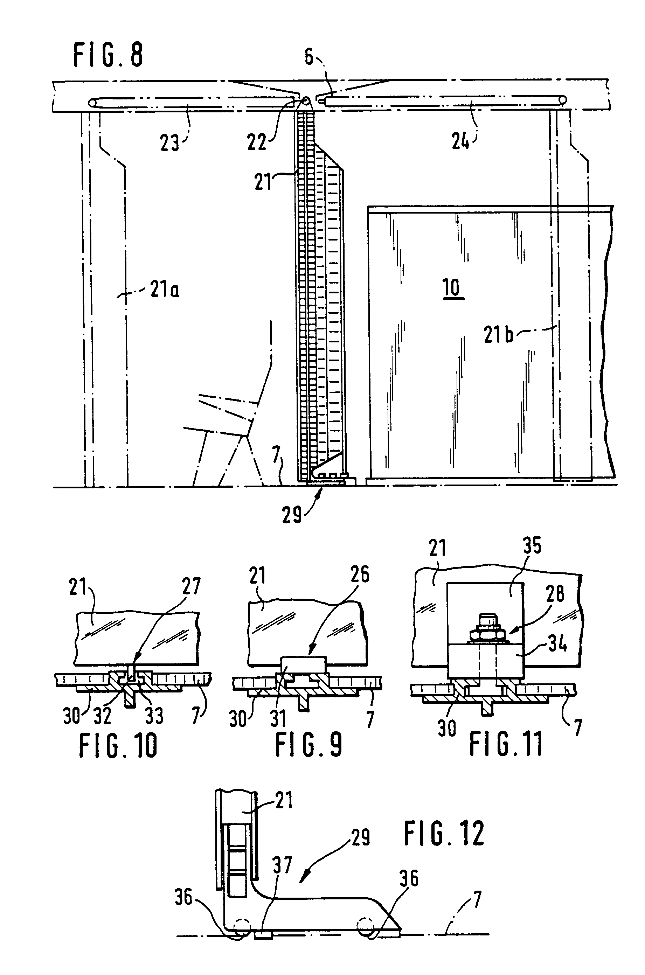

Wie insbesondere Fig. 8 zeigt, ist die Schutzwand 21 sowie die Wände der anderen Ausführungen an der Deckenstruktur 6 des Flugzeugrumpfes über einen ortsfesten Beschlag 22 gehalten. Entweder ist die Schutzwand 21 direkt mit diesem Beschlag 22 verbunden oder es sind Stützstangen 23 oder 24 an diesem Beschlag 22 gehalten, die eine - in Flugrichtung F gesehen - vornliegende Wand 21a oder eine hintenliegend Wand 21b abstützen. Die Stützstrebe 23 wird auf Zug beansprucht und die Stützstrebe 24 wird auf Druck beansprucht. Die Verbindung der Stützstreben 23 und 24 mit der Wand 21a oder 21b erfolgt über Beschläge 25 an der Wand, wie die Figuren 7 und 8 näher zeigen.

Desweiteren ist die Wand 21 sowie die weiteren Wände der Ausführungsbeispiele mit einem Verstellbeschlag 26,27,28,29 verbunden, die an der Bodenstruktur 7 in einer Bodenschiene 30 geführt sind.

Der Beschlag 26 (Fig.9) umfaßt eine an der Unterseite der Wand 21 angeordnete Rolle 31, die auf der Schiene 30 abrollt. Der weitere Beschlag 27 (Fig.10) weist einen Gleitkiel 32 auf, der ebenfalls mit der Unterseite der Wand 21 verbunden ist und in eine Gleitnut 33 der Schiene 30 ragt. Der beschlag 28 (Fig.11) besteht aus einem Gleitelement 34, das in einer eingelassenen Nut 35 der Wand 21 angeordnet ist. Desweiteren kann ein kombinierter Beschlag 29 (Fig.12) verwendet werden, der ein Rollenpaar 36 und ein Gleitkielpaar 37 aufweist, wobei die Rollen 36 auf der Schiene 7 bewegbar sind und die Gleitkiele 37 in die Nut 33 der Schiene hineinragen.

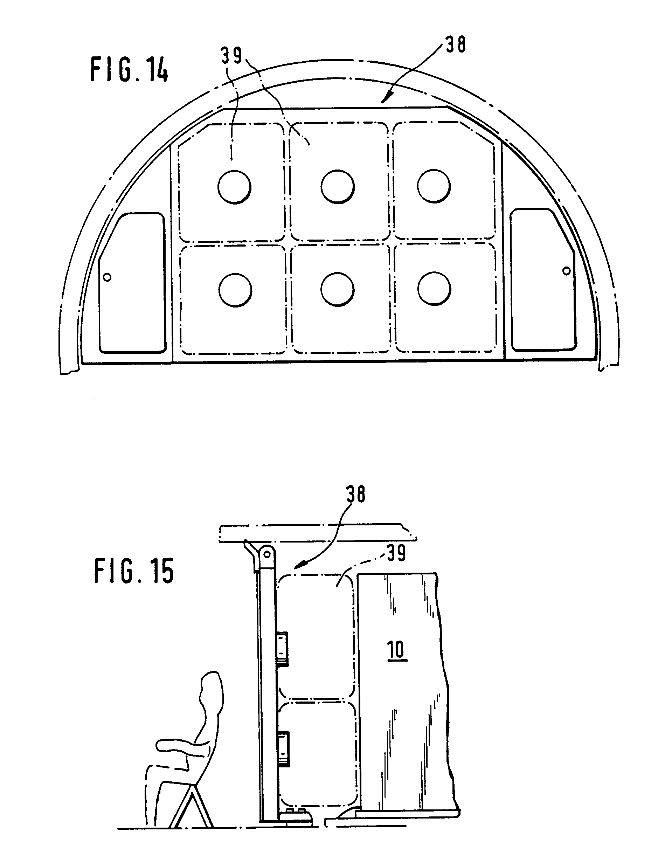

Die Ausführung einer CFK-Sandwich-Schutzwand 38 gemäß der Figuren 14 und 15 umfaßt mehrere dem Container 10 zugerichtete Airbag-Einrichtungen 39. Die Airbags sind je nach Lastaufnahme verteilt über die Wand angeordnet. Sie werden durch Gasgeneratoren mit integriertem Beschleunigungsmesser aktiviert und vom fahrzeugeigenen Überwachungssystem kontrolliert.

Die Funktion ist derart, daß die Beschleunigungsmesser die Gasgeneratoren bei Überschreitung bestimmter negativer Beschleunigungswerte (Verzögerung), welche für das Fahrzeug unzulässig sind, aktivieren (ca. 20 Millisekunden) und nach Entfaltung des Airbags (ca. 80 Millisekunden) diese Kompressionsarbeit aufnehmen können.

## Patentansprüche

1. Vorrichtung zum Abfangen von Überlasten in einer Transportkabine eines Flugzeuges über eine zwischen einem Frachtraum und einem Passagierraum angeordnete zusätzliche, quer angeordnete, aus mehreren Schichten bestehende Schutzwand, die über Beschläge mit der Aufbaustruktur des Flugzeugrumpfes verbunden ist, dadurch gekennzeichnet, daß die Schutzwand (3,11,17,18,21,38) an einer lasttragenden, mit der Schutzwand eine integrierte Baueinheit bildenden Grundwand abgestützt ist, wobei die Baueinheit an der Deckenstruktur (6) des Flugzeugrumpfes über ortsfeste Beschläge (22) gehalten ist und auf der Bodenstruktur (7) über Verstellbeschläge (26,27,28,29) an der Schutzwand längs bewegbar und auf bzw. in Bodenschienen (30) geführt ist.

2. Vorrichtung nach Anspruch 1, dadurch gekennzeichnet, daß die Schutzwand eine lasttragende CFK-Grundwand (8) umfaßt, die mit einer der Last (10) zugewandten großzelligen Integralschaumschicht (9) innig verbunden ist und die Integralschauschicht eine harte Außenoberfläche aufweist.

3. Vorrichtung nach Anspruch 1, dadurch gekennzeichnet, daß die Schutzwand eine lasttragende CFK-Grundwand (8) umfaßt, die mit einer der Last (10) zugewandten Vorderwand aus integrierten mehrschichtigen, untereinander verklebten Wabenzellenblöcken (12-14) aus Aluminium, verbunden ist die vorderseitig eine Metallschicht geringer Zugfestigkeit aufweisen.

4. Vorrichtung nach Anspruch 3, dadurch gekennzeichnet, daß die Wabenzellenblöcke (12-14) unterschiedliche Zellenweiten und Raumgewichte aufweisen.

5. Vorrichtung nach Anspruch 1, dadurch gekennzeichnet, daß die Schutzwand aus harzgetränkten Papierwabenkernen mit CFK-Decklagen in Sandwich-Bauweisen besteht und außenseitig mit einem Integral-Schaumblock abgedeckt ist, der der Last (10) zugerichtet ist.

6. Vorrichtung nach Anspruch 5, dadurch gekennzeichnet, daß die Integral-Schaumblöcke mit abgestuften Festigkeitszonen ausgeführt sind und eine geschlossene Oberfläche aufweisen.

7. Vorrichtung nach einem oder mehreren der vorhergehenden Ansprüche, dadurch gekennzeichnet, daß zwischen einer Trennwand (17) und einer lastaufnehmenden Schutzwand (18) Deformationsstreben (19) über Anschlußbeschläge (20) an den Wänden (17,18) gehalten sind.

8. Vorrichtung nach Anspruch 6, dadurch gekennzeichnet, daß die Deformationsstreben (19) im mittleren Bereich als Wellrohr mit einer definierten Stauchzone ausgeführt sind.

9. Vorrichtung nach Anspruch 1, dadurch gekennzeichnet, daß der Verstellbeschlag (26) eine Rolle (31) umfaßt, die auf der Bodenschiene (30) bewegbar geführt ist.

10. Vorrichtung nach Anspruch 1, dadurch gekennzeichnet, daß der Verstellbeschlag (27) einen in der Bodenschiene (30) geführten Gleitkiel (32) umfaßt.

11. Vorrichtung nach Anspruch 1, dadurch gekennzeichnet, daß der Verstellbeschlag (28) ein Gleitelement (34) umfaßt, das in einer Nut (35) der Schutzwand bewegbar angeordnet ist.

12. Vorrichtung nach Anspruch 1, dadurch gekennzeichnet, daß der Verstellbeschlag (29) eine mit der Wand (21) verbundene Konsole umfaßt, die ein Rollenpaar (36) und Gleitkielpaar (37) umfaßt.

13. Vorrichtung nach einem oder mehreren der vorhergehenden Ansprüche, dadurch gekennzeichnet, daß die Festbeschläge (25) teilweise über den Umfang des Rumpfes verteilt angeordnet sind und mit etwa horizontal verlaufenden Stützstangen (23 oder 24) verbunden sind, die mit ihren abgekehrten Enden in den Beschlägen der Schutzwand gehalten sind.

14. Vorrichtung nach Anspruch 1 oder einem oder mehreren der vorhergehenden Ansprüche, dadurch gekennzeichnet, daß die CFK-Schutzwand (38) an der der Last (10) zugekehrten Fläche mehrere Airbag-Einrichtungen (39) aufweist, die Beschleunigungsmesser umfassen, derart, daß eine Aktivierung des Airbags in Abhängigkeit von definierten negativen Beschleunigungswerten erfolgt.

## Claims

1. An apparatus for absorbing excessive loads in a transport cabin of an aircraft, by means of a transversely arranged, multi-layer protective wall which is located between a hold and a passenger cabin and joined to the superstructure of the fuselage by mounts, characterised in that the protective wall (3,11,17,18,21,38) is supported against a load-bearing basic wall which forms an integral constructional unit with the protective wall, the constructional unit being held to the ceiling structure (6) of the aircraft fuselage by stationary mounts (22), being longitudinally movable over the floor structure (7) by means of displaceable mounts (26,27,28,29) on the protective wall and being guided on and/or in floor rails (30).

2. Apparatus according to claim 1, characterised in that the protective wall comprises a load-bearing basic CFP wall (8), which is intimately connected to a large-cell integral foam layer (9) facing towards the load (10), and that the integral foam layer has a hard external surface.

3. Apparatus according to claim 1, characterised in that the protective wall comprises a load-bearing basic CFP wall (8) joined to a front wall facing towards the load (10), the front wall being made up of integrated multi-layer honeycomb cell blocks (12-14) of aluminium which are adhered together and which have a metal layer of low tensile strength at the front.

4. Apparatus according to claim 3, characterised in that the honeycomb cell blocks (12-14) have different cell widths and different weights per unit volume.

5. Apparatus according to claim 1, characterised in that the protective wall is made up of resin-impregnated paper honeycomb cores with covering layers of CFP in a sandwich construction, and is covered externally with an integral foam block facing towards the load (10).

6. Apparatus according to claim 5, characterised in that the integral foam blocks are constructed with zones of graduated strength and have a closed surface.

7. Apparatus according to any of the preceding claims, characterised in that between a partition wall (17) and a load-absorbing protective wall (18) deformable struts (19) are held to the walls (17,18) by connecting mounts (20.

8. Apparatus according to claim 6, characterised in that the central section of the deformable struts (19) is in the form of a corrugated tube with a defined compression zone.

9. Apparatus according to claim 1, characterised in that the displaceable mount (26) comprises a roller (31) which is guided movably on the floor rail (30).

10. Apparatus according to claim 1, characterised in that the displaceable mount (27) comprises a sliding keel (32) guided in the floor rail (30).

11. Apparatus according to claim 1, characterised in that the displaceable mount (28) comprises a sliding element (34) arranged movably in a groove (35) in the protective wall.

12. Apparatus according to claim 1, characterised in that the displaceable mount (29) comprises a bracket which is joined to the wall (21) and which has a pair of rollers (36) and a pair of sliding keels (37).

13. Apparatus according to any of the preceding claims, characterised in that the stationary mounts (25) are arranged partly around the periphery of the fuselage and joined to substantially horizontal supporting bars (23 or 24), the ends of the bars which face away from one another being held in the mounts on the protective wall.

14. Apparatus according to claim 1 or any of the preceding claims, characterised in that the protective wall (38) of CFP has a plurality of airbag devices (39) comprising acceleration meters at the surface facing towards the load (10), in such a way that the airbag is activated dependent on defined negative acceleration values.

## Revendications

1. Dispositif pour l'interception de surcharges dans une cabine de transport d'un avion par l'intermédiaire d'une paroi de protection constituée de plusieurs couches et disposée transversalement de façon supplémentaire entre un compartiment de fret et un compartiment de passagers, cette paroi de protection étant reliée par l'intermédiaire de ferrures, à la structure constitutive du fuselage de l'avion, dispositif caractérisé en ce que la paroi de protection (3, 11, 17, 18, 21, 38) prend appui contre une paroi de base supportant la charge et formant avec la paroi de protection une unité constitutive intégrée, cette unité constitutive étant maintenue par l'intermédiaire de ferrures à poste fixe (22) contre la structure de plafond (6) du fuselage de l'avion, et elle est susceptible de se déplacer longitudinalement contre la paroi de protection sur la structure de plancher (7) par l'intermédiaire de ferrures réglables (26, 27, 28, 29) et est guidée sur ou dans des rails de plancher (30).

2. Dispositif selon la revendication 1, caractérisé en ce que la paroi de protection comprend une paroi de base CFK (8) supportant la charge, qui est intimement reliée à une couche de mousse à grandes cellules avec pellicule intégrée (9) tournée vers la charge (10), et cette couche de mousse avec pellicule intégrée a une surface externe dure.

3. Dispositif selon la revendication 1, caractérisé en ce que la paroi de protection comprend une paroi de base CFK (8) supportant la charge qui est reliée à une paroi antérieure tournée vers la charge (10) et constituée de plusieurs blocs cellulaires en nids d'abeilles (12 à 14) en aluminium, collés ensemble en plusieurs couches intégrées, et qui comportent à l'avant, une couche métallique de résistance à la traction réduite.

4. Dispositif selon la revendication 3, caractérisé en ce que les blocs en nids d'abeilles (12 à 14) comportent des largeurs de cellules et des poids spécifiques différents.

5. Dispositif selon la revendication 1, caractérisé en ce que la paroi de protection est constituée selon un mode de construction en sandwich par des noyaux à nids d'abeilles en papier imbibé de résine, avec des couches de recouvrement CFK, et est recouverte du côté externe, par un bloc de mousse avec pellicule intégrée qui est dirigé vers la charge (10).

6. Dispositif selon la revendication 5, caractérisé en ce que les blocs de mousse avec pellicule intégrée sont réalisés avec des zones de résistance échelonnées et comportent une surface fermée.

7. Dispositif selon une ou plusieurs des précédentes revendications, caractérisé en ce qu'entre une paroi de séparation (17) et une paroi de protection (18) absorbant la charge, des entretoises de déformation (19) sont maintenues par l'intermédiaire de ferrures de raccordement (20) contre les parois (17, 18).

8. Dispositif selon la revendication 6, caractérisé en ce que les entretoises de déformation (19) sont réalisées dans leur zone médiane, sous la forme de tubes ondulés avec une zone de compression définie.

9. Dispositif selon la revendication 1, caractérisé en ce que la ferrure réglable (26) comprend un galet (31) qui est guidé de façon à pouvoir se déplacer sur le rail de plancher (30).

10. Dispositif selon la revendication 1, caractérisé en ce que la ferrure réglable (27) comprend une quille de glissement (32) guidée dans le rail de plancher (30).

11. Dispositif selon la revendication 1, caractérisé en ce que la ferrure réglable (28) comprend un élément glissant (34) qui est disposé de façon à pouvoir se déplacer dans une gorge (35) de la paroi de protection.

12. Dispositif selon la revendication 1, caractérisé en ce que la ferrure réglable (29) comprend une console reliée à la paroi (21) console comportant une paire de galets (36) et une paire de quilles de glissement (37).

13. Dispositif selon une ou plusieurs des précédentes revendications, caractérisé en ce que les ferrures fixes (25) sont partiellement réparties sur la périphérie du fuselage et sont reliées à des tiges de support (23 ou 24) s'étendant à peu près horizontalement, dont les extrémités opposées sont maintenues dans des ferrures de la paroi de protection.

14. Dispositif selon la revendication 1 ou bien une ou plusieurs des revendications précédentes, caractérisé en ce que la paroi de protection CFK (38) comporte sur sa surface tournée vers la charge (10) plusieurs dispositifs airbags (39) qui comprennent des moyens de mesure de l'accélération, de sorte qu'il se produit une activation de l'airbags en fonction de valeurs négatives définies de l'accélération.
